(19) European Patent Office

(11) **EP 4 549 987 A1**

(12) **EUROPEAN PATENT APPLICATION**

(43) Date of publication:
**07.05.2025   Bulletin 2025/19**

(21) Application number: **23207743.8**

(22) Date of filing: **03.11.2023**

(51) International Patent Classification (IPC):
**G01S 5/02** (2010.01)          **H04W 4/40** (2018.01)
**H04W 64/00** (2009.01)

(52) Cooperative Patent Classification (CPC):
**G01S 5/0218; H04W 4/40; H04W 64/00;**
G01S 1/042; G01S 5/0236; G01S 5/0273;
G01S 5/0284; G01S 2205/00; H04W 92/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Jornod, Guillaume**
  **10243 Berlin (DE)**
• **Stark, Maximilian**
  **20249 Hamburg (DE)**

(54) **A METHOD FOR IMPROVING THE ACCURACY OF A POSITIONING PROCEDURE FOR A USER EQUIPMENT**

(57)     The invention relates to a method (100) for improving the accuracy of a positioning procedure for a user equipment (10), comprising the following steps:
- Tracking (101) a position of another user equipment (20) based on a locating of the other user equipment (20) using a positioning procedure via a sidelink channel,
- Obtaining (102) a position information of the user equipment (10) based on a positioning procedure,
- Receiving (103) a further position information from the other user equipment (20) based on a positioning reference signal via a sidelink channel,
- Requesting (104) an information regarding an environment, specifically a driving environment, of the user equipment (10) related to a reflector (5),
- Determining (105) a reflection path (2) with a reflection point (3) based on a geometric model using the requested information, and/or each respective position information and/or a tracked previous position of the other user equipment (20) to identify a corresponding non-line-of sight signal,
- Removing (106) the non-line-of sight signal from a received line-of-sight signal (1) based on the determined reflection path (2) to improve the accuracy of the positioning procedure.

## Fig. 3

**Description**

The invention relates to a method for improving the accuracy of a positioning procedure for a user equipment. Furthermore, the invention relates to a user equipment, a computer program, and a storage medium for this purpose.

State of the art

The use of 5G sidelink positioning in the context of V2X is one of evolving technologies in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication. However, sidelink positioning still faces several challenges. One of the main challenges is the need for high-precision synchronization between devices, which requires accurate clock synchronization and coordinated transmission timing. This can be difficult to achieve in a dynamic and unpredictable environment such as the road. In addition, sidelink positioning also require significant bandwidth, which can limit its scalability in large-scale deployment scenarios. In the context of positioning, one challenge can be a multipath reception, also called non line-of-sight (NLOS). In the context of vehicular systems these NLOS paths are created by the reflection of the radio wave on objects such as the ground, vehicles, buildings, or road signs. For example, in a scenario in which two vehicles driving on the road with static and dynamic scattering objects are transmitting signals for positioning or communication. The received signal at each sampling interval in such scenario will be composed of the strong line-of-sight component and multiple replicas caused by reflections from surrounding objects. Each component impinging at the receiver can be characterized by a different received power, delay, direction, phase shift and statistical properties. Such a channel can be represented as follows:

$$h[k, \tau] = L\sum l=1 \; hl[k]\delta[\tau - \tau l],$$

where τl is the excess delay of the lth out of L sampled channel components. hl[k] is the complex fading envelope of the lth resolvable path. Further, within each sampled interval the corresponding channel component comprises N unresolvable signal replicas such that:

$$hl[k] = N\sum n=1 \; al,n[k]ej(2\pi fDl,n \; [k]k+\varphi l,n),$$

where al,n[k], fDl,n [k] and φl,n are the time varying complex amplitude, time-varying Doppler frequency shift and the initial phase of the nth out of N unresolvable subpaths within lth resolvable components.

Based on the above formulas the vehicular channel can be characterized by the presence of time-varying multi-path signal components, properties of which reflect the complex nature of the road environment surrounded by dynamic objects.

Disclosure of the invention

The above object is solved by a method with the features of claim 1, a user equipment with the features of claim 8, a computer program with the features of claim 9 and a computer-readable storage medium with the features of claim 10. Further features and details of the invention are disclosed in the respective dependent claims, the description, and the drawings. Features and details described in connection with the inventive method also apply to the inventive user equipment, the inventive computer program as well as the inventive storage medium and vice versa in each case, so that with respect to the disclosure concerning the individual aspects of the invention reference can always be made mutually.

The object is particularly solved by a method for improving the accuracy of a positioning procedure for a user equipment, comprising the following steps:

- 　Tracking a position of another user equipment based on a locating of the other user equipment using a positioning procedure via a sidelink channel,
- 　Obtaining a position information of the user equipment based on a positioning procedure,
- 　Receiving a further position information from another user equipment based on a positioning reference signal via a sidelink channel,
- 　Requesting an information regarding an environment, specifically a driving environment, of the user equipment related to a reflector,
- 　Determining a reflection path with a reflection point based on a geometric model using the requested information,

and/or each respective position information and/or a tracked previous position of the other user equipment to identify a corresponding non-line-of sight signal,

- Removing the non-line-of sight signal from a received line-of-sight signal based on the determined reflection path to improve the accuracy of the positioning procedure.

This has the advantage that the accuracy of a sidelink positioning procedure can be significantly improved. Further, this allows to advantageously increase the reliability of the sidelink positioning based on the inventive method. Furthermore, the consideration of the shape of the reflector such as for example the ground shape reduces advantageously the negative influence of interfering reflections with regard to a received signal, in particular a line-of-sight signal. The inventive method can provide location information in real-time, which is essential for sidelink positioning in the context of V2X application for improved safety and efficiency on the roads.

It is possible that the method comprises the further following step:

- Allocating the determined reflection path to a corresponding non-line-of-sight path.

This allows to advantageously improve the efficiency of the inventive method.

It is possible that the information regarding the environment is based on a high-definition map of the environment, wherein the high-definition map preferably comprises a three-dimensional model of a ground surface.

This has the advantage that the determining of the reflection path can be much more effective in identifying the relevant reflection depending on the shape of the reflector such as the ground surface. This allows to advantageously consider the or consequently remove the identified non-line-of-sight signal based on the allocated reflection path.

It is possible that the high-definition map further comprises additional information with regard to at least one of the following:

- a road model,
- a road marking,
- a static/peripheral element in the, specifically driving, environment
- a traffic sign,
- a building,
- a barrier.

The consideration of different types of reflectors improves the determination of the reflections and consequently the identification of destructive non-line-of-sight signals in relation to the received signal.

It is possible that in case of a multipath reflection scenario the determining comprises the further following steps:

- Determining the reflection paths with the respective reflection points of the multipath reflection depending on the reflector based on the geometric model using the requested information and/or each respective position information to identify a corresponding non-line-of sight signal,
- Classifying each of the determined reflection paths according to their signal strength to identify the strongest of the corresponding non-line-of-sight signals.

This allows to advantageously increase the efficiency of the inventive method in a multipath non-line-of-sight scenario. In case of multiple reflections there might be a reflection from road signs and/or incoming vehicles. In this case, the reflection might not be specular and multiple paths can be considered using the inventive method.

It is possible that the geometric model specifies the angular relation of the reflection path between a reflection point on the reflector and the respective position of the user equipment.

This has the advantage that the reflection point of a reflection path is determined geometrically in relation to the type of reflector. Based on the geometric model the strongest reflection will be the specular one, for example, from the ground. For this case it may be considered that means the incidence angle will be equal to the reflected angle such as mirror like. Therefore, this angular relation between the incidence angle and the reflected angle of the reflection path advantageously enables the inventive method to improve the accuracy of the positioning procedure by identifying the relevant reflection.

It is possible that the method is orchestrated by a Location Management Function and/or a server user equipment, wherein the method comprises the further following steps:

- Sending a request for a sidelink positioning procedure in relation to the user equipment to the Location Management Function and/or the server user equipment,
- Receiving the information regarding an environment, specifically a driving environment, of the user equipment related to a reflector,

- Receiving the information regarding the determined reflection path and/or reflection point of the reflection path based on the geometric model for further usage by the user equipment, and/or receiving a portion of the high-definition map as information regarding the, specifically driving, environment for further usage by the user equipment.

This allows to increase the flexibility of using the inventive method depending on the needed computing power. In case of a big amount of data from a high-definition map to be provided to a user equipment it is more advantageous to use a centralized network function such as the Location Management Function for providing information regarding the, specifically driving, environment based on the high-definition map.

In another aspect of the invention, a user equipment for improving the accuracy of a positioning procedure may be provided, which is configured to execute the method according to the invention. As the user equipment, for example, a computer or a virtual computer can be provided, which executes the computer program according to the invention. The computer may include at least one processor that can be used to execute the computer program. Also, a non-volatile data memory may be provided in which the computer program may be stored and from which the computer program may be read by the processor for being carried out. Thus, the user equipment according to the invention can have the same advantages as have been described in detail with reference to a method according to the invention.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid-state drive. The storage medium may, for example, be integrated into the computer. Thus, the computer-readable storage medium according to the invention can have the same advantages as have been described in detail with reference to a method according to the invention.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:

Fig. 1: A method, a user equipment, a computer program, and a storage medium according to embodiments of the invention,

Fig. 2: A schematic overview according to embodiments of the invention,

Fig. 3 A schematic overview according to embodiments of the invention.

The core of the invention lies in the usage of a priori knowledge on the environment to determine the point geometry of the NLOS path and its impact on the positioning measurement/sidelink communication. Particularly, the inventive method may leverage the usage of a high definition (HD) map, which can be embedded in one or more vehicles involved in the positioning and/or communication procedure. The HD map can comprise information related to the ground shape of the, specifically driving, environment. Further, the HD map can be used to predict other reflections from buildings and/or road signs.

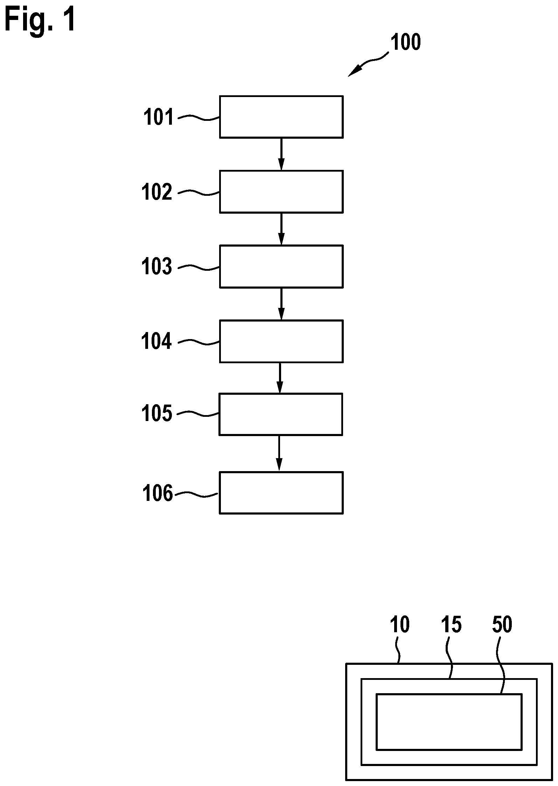

Fig. 1 depicts a method, a computer program, a storage medium and a station according to embodiments of the invention. Fig. 1 shows particularly a method 100 for improving the accuracy of a positioning procedure for a user equipment 10. The method 100 comprises the following steps: In step 101 a position of another user equipment 20 is tracked based on a, in particular previous, locating of the other user equipment 20 using a positioning procedure via a sidelink channel. In step 102 a position information of the user equipment 10 based on a positioning procedure is obtained. In step 103 a further position information from the other user equipment 20 based on a positioning reference signal is received via a sidelink channel. Then in step 104, the user equipment 10 requests an information regarding an environment, specifically a driving environment, of the user equipment 10 related to a reflector 5. According to step 105 a reflection path 2 with a reflection point 3 is determined based on a geometric model using the requested information and/or each respective position information and/or a tracked previous position of the other user equipment 20 to identify a corresponding non-line-of sight signal. In step 106, the non-line-of sight signal is removed from a received line-of-sight signal 1 based on the determined reflection path 2 to improve the accuracy of the positioning procedure.

Further, Fig. 1 shows a user equipment 10 which comprises a computer-readable storage medium 15. The storage medium 15 comprises a computer program 50.

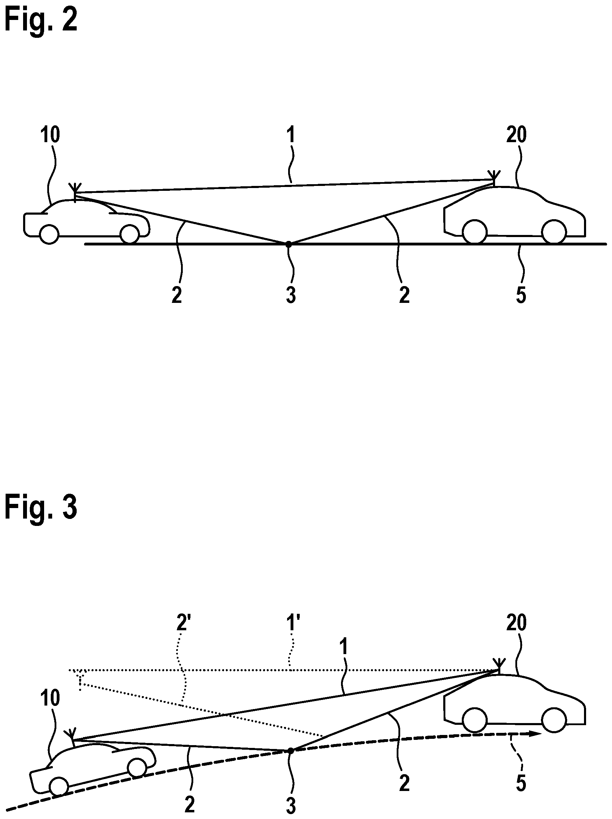

Fig. 2 depicts a schematic overview according to embodiments of the invention.

Fig.2 shows schematically the geometrical principle for determining a non-line-of-sight path from a reflection on a ground. Further, Fig. 2 illustrates a first user equipment 10 (U E1) such as a vehicle, which is connected with a second user equipment 20 (UE2) such as a vehicle via a sidelink channel. The sidelink channel is used for positioning, ranging and communication. Both user equipment 10, 20 are located on a ground surface 5, which is assumed to be flat, and the user equipment 10 has a line-of-sight 1 to the second user equipment 20. Further, Fig. 2 depicts a line-of-sight (LOS) path 1 between UE1 10 and UE 2 20.

As illustrated in Fig. 2 the first user equipment 10 (UE1) has located the second user equipment 20 (UE2) using a sidelink positioning procedure. UE1 10 is tracking the distance towards the second user equipment 20. When UE1 10 is receiving a signal, this can be interfered by multiple non-line-of sight paths (NLOS paths), which for example can be caused by a fixed reflector 5 such as a ground surface 5. Further, the fixed reflector 5 can also comprise a building, a road sign or other obstacles or barriers (not shown). When tracking the position of UE2 20 the geometry in the detection of the non-line-of-sight signal from the ground surface 5 is used to identify the interfering reflection or NLOS. This can be achieved by determining a reflection path 2 and/or a reflection point 3 of the reflected signal 2. The reflection path and/or the reflection point 3 is determined geometrically depending on the type of reflection. The strongest reflection will be the specular one, from the ground. In this case the geometric relation between UE1 10, the reflection point 3 and UE2 20 follows the rule that the incidence angle should be equal to the reflected angle (mirror like). Further, there might be further reflections from other reflectors such as road signs or incoming vehicles. In this case the reflection will not be specular and multiple reflection paths should be considered when carrying out the inventive method.

Fig. 3 depicts a further schematic overview according to embodiments of the invention.

Similar to Fig. 2 the first user equipment 10 (UE1) has located the second user equipment 20 (UE2) using a sidelink positioning procedure. UE1 10 is tracking the distance towards the second user equipment 20. UE1 10 may use for example a RTT measurement or TOA measurement to get the range between UE1 10 and UE2 20. It may also use the inventive method to improve the sidelink ranging. Therefore, it can be an iterative process and may utilize the inventive method in a loop.

Fig. 3 illustrates the example scenario that the ground surface 5 is not flat or the NLOS path 2 from ground reflection with a non-flat ground shape 5. If the three-dimensional ground shape 5 is not considered when determining the reflection (ideal flat ground), the reflection path 2' or NLOS path 2', the reflection point 3' and an expected line-of-sight (LOS) path 1' would be determined as depicted in Fig. 3. In other words, the path 2' indicate the expected LOS and NLOS path if the ground shape 5 is not accounted for. As a consequence, the positioning procedure performed by the user equipment 10 would be carried out incorrectly and consequently an incorrect position of the other user equipment 20 would be assumed.

Based on this it is necessary to consider the correct positioning based on the three-dimensional course of the ground surface 5 as provided by the inventive method.

Fig. 3 illustrates the usage of the data from the high-definition map as a dashed line 5, which is used according to the invention to predict the NLOS path from the reflection path 2 and to remove it from the line-of-sight signal 1. The high-definition map should at least comprise a three-dimensional model of a road. Further, the HD map may comprise a road marking, traffic signs, and/or barriers. UE1 10 can request or access such an information related to any kind of a reflector, for example, the ground shape 5 or optionally road signs, a building, a barrier, a bridge, or the like. The high-definition map may comprise a data format like for example in a spatial database such as PostGIS or similar. The request for information regarding the, specifically driving, environment based on the HD map can be triggered by a push information from the backend indicating that a new version is available, or by local data reaching the out of date limit, or by accessing a region for which there is no local data available, or by starting the positioning procedure in-coverage.

The user equipment 10 can obtain its own position based on the usage of a round trip time (RTT) measurement or a time of arrival (TOA) measurement to get the range between UE1 10 and UE2 20. It may also use the inventive method to improve the sidelink ranging, it is then in an iterative process and performs the inventive method in a loop. To achieve this the UE1 10 can obtain information regarding its environment from the HD map as described above. Further, UE1 10 can receive further position information based on a received positioning reference signal from another user equipment 20. The user equipment 10 can use the position information of UE2 20 and its own position together with the received information regarding the, specifically driving, environment based on the HD map to determine or predict the reflection path 2 based on the geometry of the reflection path 2 together with the NLOS path. Once the geometry of the reflection path 2 is determined, the NLOS path is easily deductible (UE1 -point of reflection-UE2), and the property of the reflected signal (including delay) can be determined. Then UE1 10 can use the predicted path 2 to remove the reflection from the received signal 1, which may improve the accuracy of the positioning procedure. The knowledge of the reflection point, or reflection path can be a valuable input to the determination of the properties of the (NLOS) reflected signal 2. Once determined, the reflected signal can be identified in the received signal and either removed or used for improving the positioning procedure.

In another embodiment, the predicted path is not removed, if it is constructive.

In another embodiment, the received signal 2 is an ongoing communication signal instead of a positioning procedure signal.

In another embodiment, the inventive procedure is orchestrated by a Location Management Function (LMF) or a server UE. In such an embodiment the steps of the inventive method could be as follows:

UE1 10 can request a sidelink positioning procedure towards UE2 20 to the LMF or a server UE. Then, the LMF or the server UE can query information related to the HD map.

The LMF or server UE obtains the position information for UE1 10 and UE2 20. Then, the UE2 10 is requested to send a positioning refence signal to the UE1 10. In a possible next step, the user equipment 10 can be provided with the geometry of the NLOS path 2 by the LMF or the server UE. Alternatively, the relevant portion of the HD map can be provided to the UE1. Based on the provided and received information UE1 10 can utilize the predicted path 2 to remove the reflection from the received signal 1 which may improve the accuracy of the positioning procedure. Alternatively, UE1 10 can provide the raw received signal to the LMF or server UE, which then may use the predicted path for further usage.

The above explanation of the embodiments describes the present invention in the context of examples. Of course, individual features of the embodiments can be freely combined with each other, provided that this is technically reasonable, without leaving the scope of the present invention.

**Claims**

1. A method (100) for improving the accuracy of a positioning procedure for a user equipment, comprising the following steps:

   - Tracking (101) a position of another user equipment (20) based on a locating of the other user equipment (20) using a positioning procedure via a sidelink channel,
   - Obtaining (102) a position information of the user equipment (10) based on a positioning procedure,
   - Receiving (103) a further position information from the other user equipment (20) based on a positioning reference signal via a sidelink channel,
   - Requesting (104) an information regarding an environment, specifically a driving environment, of the user equipment (10) related to a reflector (5),
   - Determining (105) a reflection path (2) with a reflection point (3) based on a geometric model using the requested information, and/or each respective position information and/or a tracked previous position of the other user equipment (20) to identify a corresponding non-line-of sight signal,
   - Removing (106) the non-line-of sight signal from a received line-of-sight signal (1) based on the determined reflection path (2) to improve the accuracy of the positioning procedure.

2. The method (100) of claim 1, **characterized in that** the method (100) comprises the further following step:

   - Allocating the determined (104) reflection path (2) to the corresponding non-line-of-sight path.

3. The method (100) of any one of the preceding claims, **characterized in that** the information regarding the environment is based on a high-definition map of the environment, wherein the high-definition map preferably comprises a three-dimensional model of a ground surface (5).

4. The method (100) of claim 3, **characterized in that** the high-definition map further comprises additional information with regard to at least one of the following:

   - a road model,
   - a road marking,
   - a static/peripheral element in the, specifically driving, environment
   - a traffic sign,
   - a building,
   - a barrier.

5. The method (100) of any one of the preceding claims, **characterized in that** in case of a multipath reflection scenario the determining (104) comprises the further following steps:

   - Determining the reflection paths (2) with the respective reflection points (3) of the multipath reflection depending on the reflector (5) based on the geometric model using the requested information and/or each respective position information to identify a corresponding non-line-of sight signal,
- Classifying each of the determined reflection paths (2) according to their signal strength to identify the strongest of the corresponding non-line-of-sight signals.

6. The method (100) of any one of the preceding claims, **characterized in that** the geometric model specifies the angular relation of the reflection path (2) between a reflection point (3) on the reflector (5) and the respective position of the user equipment (10,20).

7. The method (100) of any one of the preceding claims, **characterized in that** the method (100) is orchestrated by a Location Management Function and/or a server user equipment, wherein the method (100) comprises the further following steps:

- Sending a request for a sidelink positioning procedure in relation to the user equipment (10, 20) to the Location Management Function and/or the server user equipment,
- Receiving the information regarding an environment, specifically a driving environment, of the user equipment (10) related to a reflector,
- Receiving the information regarding the determined reflection path (2) and/or the reflection point (3) of the reflection path (2) based on the geometric model for further usage by the user equipment (10), and/or receiving a portion of the high-definition map as information regarding the, specifically driving, environment for further usage by the user equipment (10).

8. A user equipment (10) for improving the accuracy of a positioning procedure comprising means for carrying out the method (100) of any one of the preceding claims.

9. A computer program (50), comprising instructions which, when the computer program (50) is executed by a user equipment (10), cause the user equipment (10) to carry out the method (100) of any one of claims 1 to 7.

10. A computer-readable storage medium (15) comprising instructions which, when executed by a user equipment (10), cause the computer (10) to carry out the steps of the method (100) of any one of claims 1 to 7.

**Fig. 1**

100

101

102

103

104

105

106

10  15  50

Fig. 2

Fig. 3

| | Europäisches Patentamt European Patent Office Office européen des brevets | **EUROPEAN SEARCH REPORT** | Application Number EP 23 20 7743 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/078581 A1 (CHOI CHANG-SIK [KR] ET AL) 10 March 2022 (2022-03-10) <br> * figures 4A-6, 9 * <br> * paragraphs [0036] - [0038], [0066] - [0105] * <br> * paragraphs [0109] - [0120] * <br> ----- | 1-10 | INV. G01S5/02 H04W4/40 H04W64/00 |
| A | CN 107 205 226 A (UNIV SHANGHAI JIAOTONG) 26 September 2017 (2017-09-26) <br> * abstract * <br> * figure 1 and related text * <br> ----- | 7 | |
| | | | TECHNICAL FIELDS SEARCHED (IPC) <br><br> G01S <br> H04W |

The present search report has been drawn up for all claims

| Place of search | Date of completion of the search | Examiner |
|---|---|---|
| Munich | 11 April 2024 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 7743**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-04-2024**

| Patent document cited in search report | Publication date | Patent family member(s) | Publication date |
|---|---|---|---|
| US 2022078581 A1 | 10-03-2022 | BR 112023003233 A2 | 28-03-2023 |
| | | CN 116034284 A | 28-04-2023 |
| | | EP 4209071 A1 | 12-07-2023 |
| | | KR 20230061358 A | 08-05-2023 |
| | | US 2022078581 A1 | 10-03-2022 |
| | | WO 2022051615 A1 | 10-03-2022 |
| CN 107205226 A | 26-09-2017 | NONE | |

EPO FORM P0459

For more details about this annex : see Official Journal of the European Patent Office, No. 12/82